# EUROPÄISCHE PATENTSCHRIFT

(11) **EP 1 190 516 B1**
(45) Veröffentlichungstag und Bekanntmachung des Hinweises auf die Patenterteilung: **03.08.2005**
(21) Anmeldenummer: 00947771.2
(22) Anmeldetag: 29.05.2000
(51) Int. Cl.: H04J 3/06, H04Q 11/04

(54) **SCHALTUNGSANORDNUNG ZUR TAKTERZEUGUNG IN EINEM KOMMUNIKATIONSSYSTEM**
CIRCUIT FOR GENERATING CLOCK PULSES IN A COMMUNICATIONS SYSTEM
CIRCUIT GENERATEUR D'IMPULSIONS D'HORLOGE DANS UN SYSTEME DE COMMUNICATION

(30) Priorität: 30.06.1999 DE 19930191
(43) Veröffentlichungstag der Anmeldung: 27.03.2002
(73) Patentinhaber: Infineon Technologies AG, 81669 München (DE)
(72) Erfinder: SCHEDEL, Ralf, D-82319 Starnberg (DE); FIESSINGER, Walter, D-82024 Taufkirchen (DE); BALB, Markus, D-81547 München (DE)
(74) Vertreter: Reinhard - Skuhra - Weise & Partner
(86) Internationale Anmeldenummer: PCT/DE2000/001735
(87) Internationale Veröffentlichungsnummer: WO 2001/003342

(56) Entgegenhaltungen:
- DE-C- 19 623 480
- GB-A- 2 329 093
- US-A- 5 060 241

## Beschreibung

Die vorliegende Erfindung betrifft eine Schaltungsanordnung für ein Kommunikationssystem zum Abschließen einer Mehrzahl von Schnittstellen an einem gemeinsamen Bus und zur Erzeugung eines Synchronsierungstaktes zur Synchronisierung des Busses.

Die US-A-5,060,241 offenbart eine Schaltungsanordnung zur Takterzeugung in einem Kommunikationssystem, welche mindestens einen Netzanschluß aufweist, wobei jeder Netzanschluß mit jeweils mindestens einer Übertragunsleitung und mit einem Bus verbindbar ist und wobei ein Takt zur Synchronisation des Busses vorgesehen ist. Eine Mehrzahl von Taktgebern zur Erzeugung eines Taktes für den Bus ist vorgesehen sowie Mittel zur Auswahl eines der Taktgeber.

Ähnliche Schaltungsanordnungen sind auch aus der DE 196 123 480 C1 und aus der GB 2 329 093 A bekannt.

Der teilnehmerseitige Anschluß bei ISDN (Integrated Services Digital Network), der sogenannte ISDN-Basisanschluß, weist mehrere Referenzpunkte R, S, T, U, die Schnittstellen entsprechen, auf.

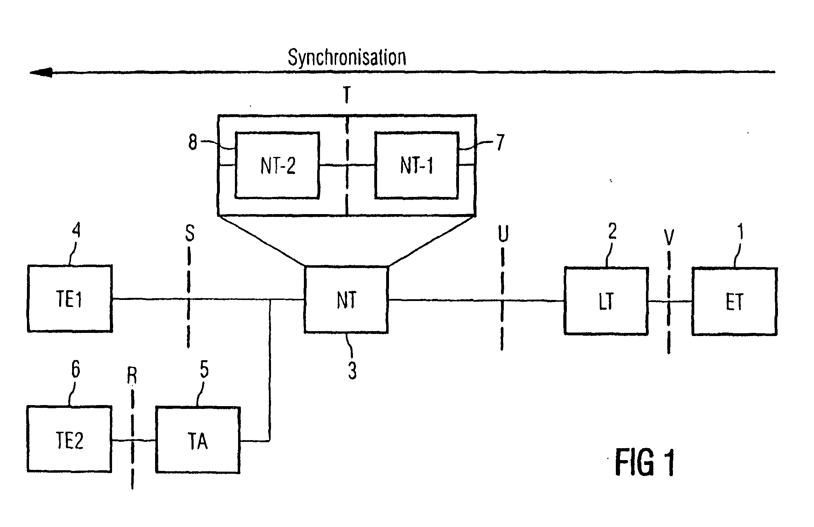

Ein Modell des ISDN-Basisanschluß mit einer Verbindung zu einer Vermittlungsstelle ist in Figur 1 dargestellt. Die U-Schnittstelle bildet dabei den Leitungsabschluß auf der Teilnehmerseite als auch auf der Vermittlungsstellenseite.

Die Vermittlungsstelle weist eine lokale Vermittlungsstelle 2 (LT = Line Termination) und eine digitale ISDN-Vermittlungseinrichtung 1 (ET = Exchange Termination), die über die V-Schnittstelle miteinander kommunizieren, auf.

Der ISDN-Basisanschluß weist auf der Teilnehmerseite einen Netzabschluß 3 (NT = Network Termination) auf. Der Netzabschluß 3 setzt sich aus einem ersten Netzabschluß 7 (NT-1), der Nutz- und Signalisierungsinformationen an die Vermittlungsstelle überträgt (physikalischer Netzabschluß gemäß Ebene 1 des ISO/OSI-Referenzmodells), und einem zweiten Netzabschluß 8 (NT-2), der konzentrierende und vermittelnde Aufgaben übernimmt (logischer Netzabschluß gemäß Ebene 2 und 3 des ISO/OSI-Referenzmodells), zusammen. Der erste und zweite Netzabschluß 7, 8 sind über die T-Schnittstelle verbunden.

Ein digitales ISDN-kompatibles Teilnehmerendgerät 4 (TE1) ist über die S-Schnittstelle direkt mit dem zweiten Netzabschluß 8 verbindbar.

Zum Anschließen eines analogen Teilnehmerendgerätes 6 (TE2) ist ein Terminal-Adapter 5 (TA), der mit dem zweiten Netzabschluß 8 verbunden wird, notwendig. Über die R-Schnittstelle ist dann das analoge Teilnehmerendgerät 6 mit dem Terminal-Adapter 5 verbindbar.

In dem ISDN-Basisanschluß wird eine hierarchische Taktsynchronisation angewendet: eine als Master konfigurierte Einrichtung, beispielsweise eine die oberen Ebenen des ISO/OSI-Referenzmodells ausführende Einrichtung, synchronisiert dabei eine als Slave konfigurierte Einrichtung, beispielsweise die unteren Ebenen des ISO/OSI-Referenzmodells ausführende Einrichtung.

In Figur 1 ist die Vermittlungsstelle 2 als Master des Netzabschlusses 3 konfiguriert und synchronisiert ihn.

Bei einer Vielzahl von Slaves, die von einem Master synchronisiert werden, wird einer dieser Slaves als Referenz-Taktgeber für die übrigen Slaves bestimmt. Bei einem Ausfall des Referenz-Taktgebers ist ein weiterer Slave als Referenz-Taktgeber bestimmt und so fort.

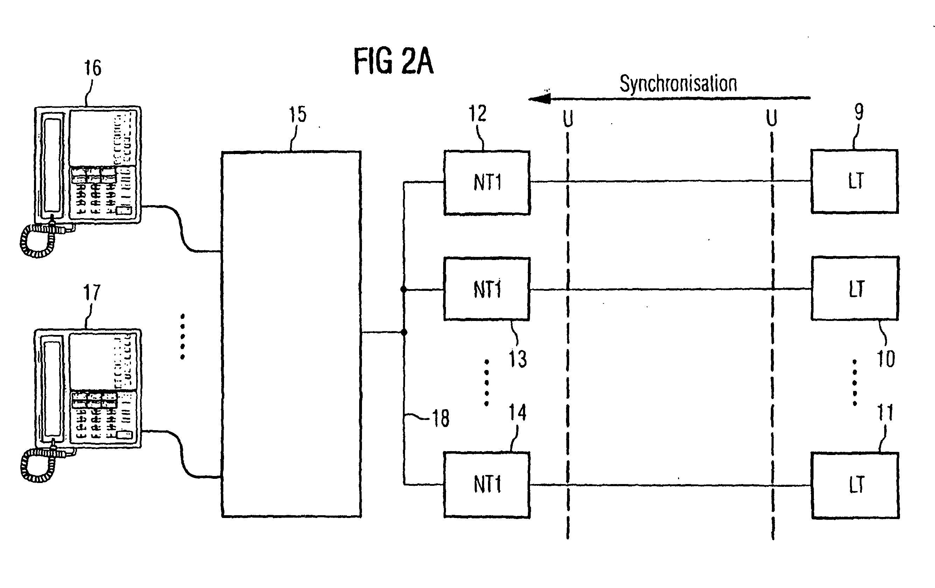

In Figur 2a ist eine Anordnung dargestellt, bei der in einem ISDN-Basisanschluß auf der Teilnehmerseite mehrere erste Netzabschlüsse 12 bis 14 über einen gemeinsamen Netzabschluß-Systembus 18 mit einer Telekommunikationsanlage 15 verbunden sind. Die Telekommunikationsanlage 15 weist dabei die weiteren Elemente des ISDN-Basisanschlusses der Teilnehmerseite auf. An die Telekommunikationsanlage 15 sind mehrere Teilnehmerendgeräte 16 bis 17 anschließbar. Die ersten Netzabschlüsse 12 bis 14 sind jeweils über eine U-Schnittstelle mit lokalen Vermittlungseinrichtungen 9 bis 11 verbunden.

Für die hierarchische Taktsynchronisation führen die ersten Netzabschlüsse 12 bis 14 Aufgaben der gleichen Ebene des ISO/OSI-Referenzmodells aus, so daß einer der ersten Netzabschlüsse 12 bis 14 bzw. eine der entsprechenden U-Schnittstellen als erster Referenz-Taktaeber für die verbleibenden ersten Netzabschlüsse bzw. U-Schnittstellen ausgewählt werden muß. Weiterhin müssen weitere Referenz-Taktgeber, die bei einem Ausfall des ersten Referenz-Taktgebers dessen Aufgabe übernehmen, bestimmt werden. Der Netzabschluß-Systembus 18 muß dabei auf den jeweiligen Referenz-Taktgeber synchronisiert werden.

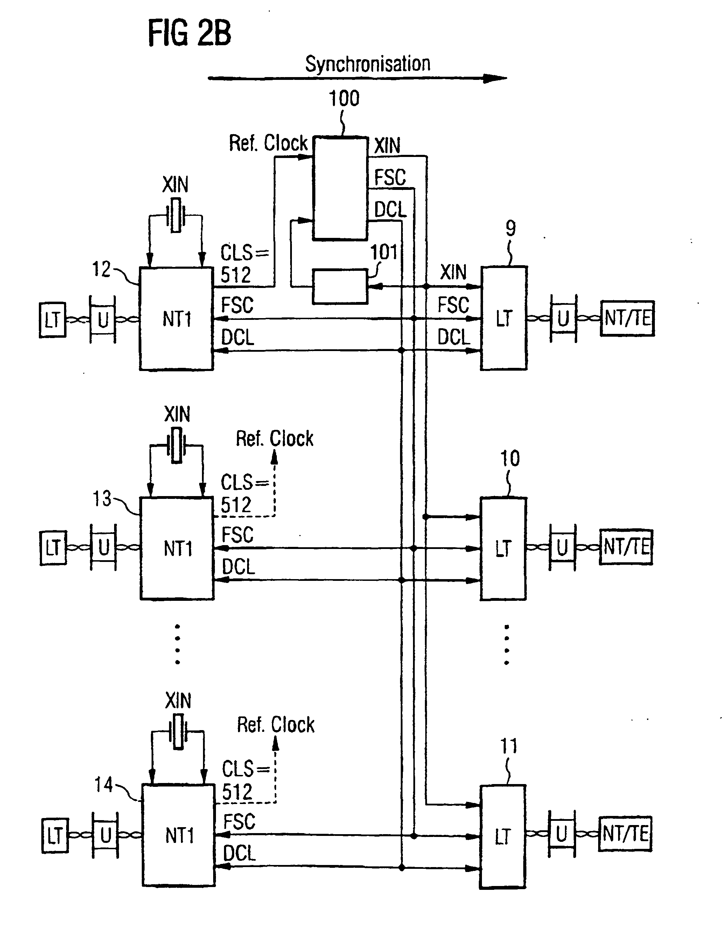

Figur 2b zeigt die Takterzeugung und -verteilung verschiedener Takte in der in Figur 2a abgebildeten Anordnung im Detail. Die zum Betrieb der Anordnung notwendigen Takte werden über eine Phasenregelschleife 100 und einen Taktteiler 101 erzeugt. Zur Verdeutlichung der Richtung der Synchronisation ist in Fig. 2b auf der linken Seite schematisch eine Vermittlungsstelle LT des Netzbetreibers dargestellt, die für die Synchronisation verantwortlich ist. Ferner ist auf der rechten Seite beispielhaft ein Netzabschluß mit Teilnehmerendgerät NT/TE dargestellt.

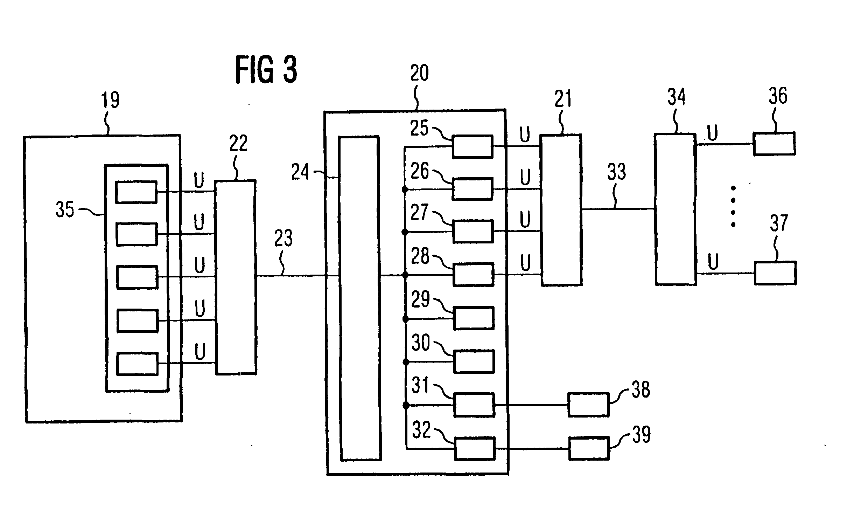

Jeder der ersten Netzabschlüsse 12 bis 14 weist einen eigenen 15,36 MHz-Quarz auf, mit dem beispielsweise ein 512 kHz Takt CLS als Referenztakt erzeugt wird. Der Takt CLS wird der Phasenregelschleife 100 zugeführt, die aus dem 512 kHz Takt wiederum einen 15,36 MHz Takt XIN, einen 8 kHz Rahmentakt FSC und einen Bittakt DCL, der eine Frequenz zwischen 512 und 4096 kHz aufweist, erzeugt. Der Rahmentakt FSC und der Bittakt DCL werden über jeweils eine Leitung jedem der ersten Netzabschlüsse 12 bis 14 und jeder der lokalen Vermittlungsstellen 9 bis 11 zugeführt. Der Takt XIN wird über den Taktteiler 101 auf die Phasenregelschleife 100 zurückgeführt und parallel über eine Leitung den lokalen Vermittlungsstellen 9 bis 11 zugeführt. Der Referenz-Taktgeber ist bei dieser Anordnung der 512 kHz Takt CLS, der in jedem der ersten Netzabschlüsse 12 bis 14 erzeugt wird. In Figur 3 ist eine Anordnung dargestellt, bei der eine Ortsvermittlungsstelle 20, die nicht ISDN-fähig ist, mittels eines "Digital-Loop-Carrier"-Systems (DLC-System) Teilnehmern einen Zugang zum öffentlichen ISDN-Netz ermöglicht.

Dazu werden mehrere erste Teilnehmeranschlüsse 35 in einer ersten sogenannten "D-Channel-Bank" 22 bei einer digitalen ISDN-Vermittlungseinrichtung 19 zusammengefaßt. Die Basiskanäle jedes Basisanschlusses werden konzentriert über einen ersten breitbandigen Übertragungskanal 23 an die Ortsvermittlungsstelle 20 übertragen.

In der Ortsvermittlungsstelle 20 werden die Basiskanäle von einer zweiten "D-Channel-Bank" 24 auf die entsprechenden Teilnehmeranschlüsse 25 bis 32, die im Fachjargon auch als Linecards bezeichnet werden, verteilt. Mehrere Anschlüsse 25 bis 28 werden dann in einer dritten "D-Channel-Bank" 21 zu sogenannten "Central-Office-Terminals" zusammengefaßt und über einen zweiten breitbandigen Übertragungskanal 33 zu einem Teilnehmer mit mehreren Netzabschlüssen 36 bis 37 übertragen.

Dort werden die einzelnen Anschlüsse 25 bis 28 über eine vierte "D-Channel-Bank" 34, die die sog. RDT ( RDT = Remote Digital Terminal) bildet, auf die entsprechenden Netzabschlüsse verteilt.

Die in den Figuren 2 bis 3 dargestellten Anordnungen können auch für sogenannte xDSL-Systeme (x Digital Subscriber Line-Systeme) wie ADSL, SDSL, VDSL oder HDSL eingesetzt werden. Dabei muß nur das ISDN-Übertragungsverfahren an den U-Schnittstellen durch das entsprechende xDSL-Übertragungsverfahren ersetzt werden. Die prinzipielle Anordnung, wie in den Figuren 2 bis 3 dargestellt, ändert sich dabei nicht.

Ebenso wie bei der in Figur 2 dargestellten Anordnung muß bei der in Figur 3 dargestellten Anordnung für die hierarchische Taktsynchronisation ein Referenz-Taktgeber ausgewählt sowie weitere Referenz-Taktgeber, die bei einem Ausfall des ersten Referenz-Taktgebers als Ersatz dienen, bestimmt werden.

Der Erfindung liegt daher die Aufgabe zugrunde, eine Schaltungsanordnung zur Takterzeugung in einem Kommunikationssystem, das insbesondere auf ISDN oder xDSL basiert, zu schaffen, wobei die eingangs geschilderten Nachteile vermieden werden und wobei insbesondere die Schaltungsanordnung direkt mit einer Telekommunikationsanlage oder einem Konzentrator über einen gemeinsamen Netzabschluß-Systembus verbindbar ist.

Diese Aufgabe wird durch eine Schaltungsanordnung mit den Merkmalen des Patentanspruchs 1 gelöst. Bevorzugte Ausgestaltungen der Erfindung sind Gegenstand der abhängigen Patentansprüche.

Die erfindungsgemäße Schaltungsanordnung zur Takterzeugung in einem Kommunikationssystem weist mindestens einen Netzabschluß auf, wobei jeder Netzabschluß mit jeweils mindestens einer Übertragungsleitung und mit einem Bus verbindbar ist und wobei ein Takt zur Synchronisierung des Busses vorgesehen ist. Dabei sind bei der Schaltungsanordnung eine Vielzahl von Taktgebern zur Erzeugung des Taktes und Mittel zur Auswahl eines Taktgebers vorgesehen. Vorteilhafterweise ist dabei die Schaltungsanordnung über den Bus an eine Telekommunikationsanlage ohne schaltungstechnischen Zusatzaufwand anschließbar.

Erfindungsgemäß sind die Mittel zur Auswahl eines Taktgebers programmierbar. Ferner können die Mittel zur Auswahl eines Taktgebers über ein Register programmierbar sein. Durch die Programmierung kann die Schaltungsanordnung an verschiedene Anforderungen angepaßt werden und ist insbesondere bei einem Ausfall eines der Taktgeber weiterhin durch einfache Umprogrammierung betriebsbereit.

Erfindungsgemäß weisen die Mittel zur Auswahl eines Taktgebers dabei einen ersten Multiplexer auf, an dessen Eingängen insbesondere über sog. Phase Control Units Übertragungsleitungen anschließbar sind und wobei über eine der Übertragungsleitungen ein Signal, aus dem ein Takt abgeleitet wird, empfangen wird. Mit anderen Worten, die empfangenen Signale der angeschlossenen Übertragungsleitungen dienen sozusagen als Taktgeber und die Phase Control Units extrahieren die Takt-Information aus dem jeweils empfangenen Signal. Insbesondere weisen die Mittel zur Auswahl eines Taktgebers einen zweiten Multiplexer auf, an dessen Eingängen das Ausgangssignal einer Phasenregelschleife und ein Referenztakt anliegt. Der Phasenregelschleife werden dabei bevorzugt als Eingangssignale ein weiterer Takt von einer Quarzoszillatorschaltung und das Ausgangssignal des ersten Multiplexers zugeführt.

In einer bevorzugten Ausführungsform können die folgenden drei Taktgeber als Referenztaktgeber verwendet werden: als erster Taktgeber ein über eine der Übertragungsleitungen emfangenes Signal, als zweiter Taktgeber der Referenztakt selbst wenn alle Übertragungsleitungen inaktiv sind, und als dritter Taktgeber die Kombination der Empfangssignale von mindestens zwei Übertragungsleitungen dient, wobei der vom dritten Taktgeber erzeugte Takt insbesondere durch Mittelung der aus den Signalen der beteiligten Übertragungsleitungen ermittelten Taktinformation erzeugt wird. Die Mittelung zur Ermittlung des Takt kann auch mit einer Wichtung versehen sein. Vorzugsweise werden die Signale aller vier Übertragungsleitungen kombiniert, um die Taktinformation für den Referenztakt abzuleiten.

Die Signale, die über die Übertragungsleitungen übertragen werden, entsprechen bevorzugt dem U-Schnittstellenprotokoll von ISDN. Vorteilhafterweise kann dann die Schaltungsanodnung in ISDN-Anwendungen eingesetzt werden, bei denen mehrere U-Schnittstellen verwaltet werden.

Die Signale, die über die Übertragungsleitungen übertragen werden, können andererseits auch einem XDSL-Protokoll entsprechen. Dazu muß nur das Signalübertragungsverfahren auf ein XDSL-Übertragungsverfahren umgestellt werden. Insbesondere kann das XDSL-Protokoll einem ADSL- oder SDSL- oder VDSL- oder HDSL-Protokoll entsprechen.

Bevorzugte Ausgestaltungen der Erfindung ergeben sich aus der nachfolgenden Beschreibung in Verbindung mit den Zeichnungen. In den Zeichnungen zeigt
Figur 1 ein Modell des ISDN-Basisanschluß mit einer Verbindung zu einer Vermittlungsstelle,
Figur 2a eine Anordnung, bei der in einem ISDN-Basisanschluß auf der Teilnehmerseite mehrere erste Netzabschlüsse über einen gemeinsamen Netzabschluß-Systembus mit einer Telekommunikationsanlage verbunden sind,
Figur 2b die Takterzeugung und -verteilung bei der in Figur 2a dargestellten Anordnung,
Figur 3 eine Anordnung, bei der eine Ortsvermittlungsstelle mittels eines "Digital-Loop-Carrier"-Systems (DLC-System) Teilnehmern eine Zugang zum öffentlichen ISDN-Netz ermöglicht,
Figur 4 ein erstes Ausführungsbeispiel einer Schaltungsanordnung gemäß der Erfindung, und
Figur 5 ein zweites Ausführungsbeispiel einer Schaltungsanordnung gemäß der Erfindung.

Auf die Figuren 1 bis 3, die den Stand der Technik betreffen, wurde bereits in der Einleitung dieser Beschreibung eingegangen.

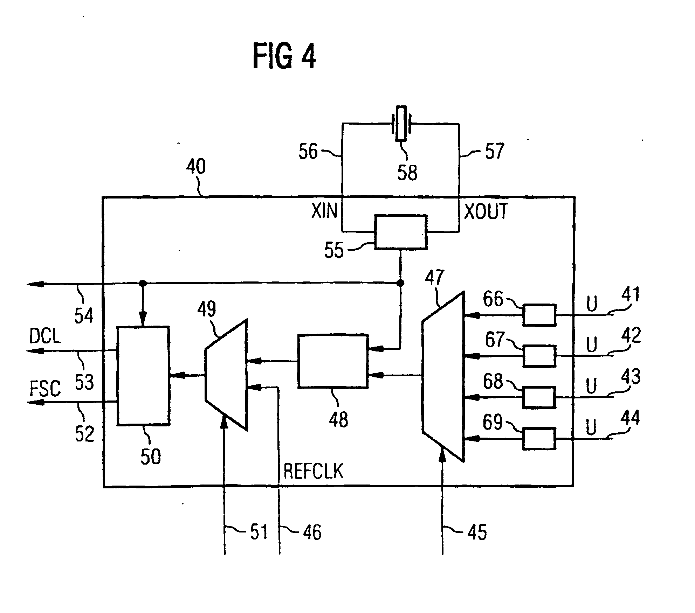

In Figur 4 ist eine integrierte Schaltung 40 dargestellt, die vier U-Schnittstellen 41 bis 44 aufweist. Die integrierte Schaltung 40 wird in einem Kommunikationssystem zum Anschließen von vier U-Schnittstellen an einen gemeinsamen Netzabschluß-Systembus, der wiederum mit einer Telekommunikationsanlage verbindbar ist, eingesetzt.

In die integrierte Schaltung 40 ist ein externer Referenztakt 46 einspeisbar, der beispielsweise von einer weiteren integrierten Schaltung erzeugt wird. Dieser externe Referenztakt 46 wird dann benötigt, wenn keine der vier U-Schnittstellen aktiv ist und demnach keine U-Schnittstelle als Referenz-Taktgeber zur Verfügung steht.

Jede der vier U-Schnittstellen 41 bis 44 kann als Referenz-Taktgeber programmiert werden. Dazu weist die integrierte Schaltung 40 einen ersten Multiplexer 47, der über ein erstes Steuersignal 45 steuerbar ist, auf. Um aus den jeweiligen Empfangssignalen der U-Schnittstellen 41, 42, 43, 44 ein Taktsignal zu extrahieren, ist dem Multiplexer 47 jeweils für jeden Eingang eine Phasensteuereinheit 66, 67, 68, 69 (Phase Control Unit PCU) auf. Das erste Steuersignal 45 schaltet dabei eine der vier U-Schnittstellen 41 bis 44, die mit den Eingängen des ersten Multiplexers 47 verbunden sind, auf den Ausgang des ersten Multiplexers 47 durch. Das Ausgangssignal des Multiplexers 47 wird in eine Phasenregelschleife 48, die über einen Taktgenerator 55 einen Takt von 15,36 MHz erhält, geführt. Der Takt von 15,36 MHz steht als Ausgangssignal 54 beispielsweise für weitere integrierte Schaltungen zur Verfügung. Der Taktgenerator 55 ist über Anschlüsse 56 und 57 mit einem 15,36 MHz-Quarz 58 verbindbar. Die Phasenregelschleife 48 regeneriert aus den Signalen, die über eine als Referenz-Taktgeber arbeitende U-Schnittstelle empfangen werden, den Referenztakt, der einem zweiten Multiplexer 49 zugeführt wird. Der zweite Multiplexer 49 wird von einem zweiten Steuersignal 51 umgeschaltet. Dabei schaltet der zweite Multiplexer entweder den aus einer U-Schnittstelle regenerierten Referenztakt oder den eingespeisten externen Referenztakt 46, falls keine der vier U-Schnittstellen aktiv ist, auf eine PLL/Taktteiler- Einheit 50 durch. Die PLL/Taktteiler- Einheit 50 teilt einen ersten Takt an seinem Eingang auf einen zweiten Takt 52 und einen dritten Takt 53. Der zweite Takt 52 ist dabei zur Synchronisierung eines Netzabschluß-Systembusses verwendbar und weist einen 8 kHz Rahmentakt FSC auf. Der dritte Takt 53 weist einen Bittakt DCL auf. Ferner verwendet die PLL/Taktteiler-Einheit 50 den vom Taktgenerator 55 erzeugten Takt.

Die integrierte Schaltung 40 ist als Master oder als Slave programmierbar. Damit kann die Synchronisationsrichtung einer Anordnung, in der die integrierte Schaltung 40 eingesetzt wird, eingestellt werden. Dabei ist im Master-Modus der Referenz-Taktgeber durch Programmierung der integrierten Schaltung 40 auf eine der folgenden Taktquellen einstellbar:
- eine der vier U-Schnittstellen 41 bis 44 dient als Referenz-Taktgeber; oder
- es wird der Mittelwert über alle vier U-Schnittstellen 41 bis 44 gebildet; der Mittelwert dient dann als Referenz-Taktgeber; oder
- ein externer Referenztakt 46 dient als Referenz-Taktgeber; diese Einstellung ist dann sinnvoll, wenn keine der vier U-Schnittstellen 41 bis 44 aktiv ist.

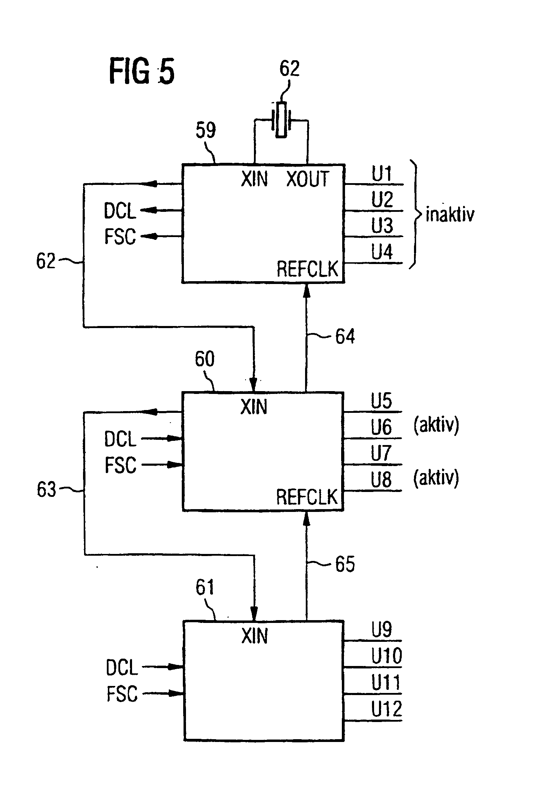

In Figur 5 sind diese drei Betriebsfälle dargestellt.

Eine erste 59, zweite 60 und dritte 61 wie in Figur 4 dargestellte integrierte Schaltung sind zu einer Kette verschaltet und dienen zur Ansteuerung von insgesamt zwölf U-Schnittstellen U1 bis U12.

Die erste integrierte Schaltung 59 ist als Master konfiguriert. Dazu ist ein 15,36 MHz Quarz 62 mit der ersten integrierten Schaltung 59 verbunden. Intern wird damit ein 15,36 MHz Takt erzeugt, der als Taktsignal 62 an einen zum Anschließen eines Quarzes vorgesehenen Anschluß XIN der zweiten integrierten Schaltung 60 geführt wird. Dadurch benötigt die zweite integrierte Schaltung keinen Quarz. Die mit der ersten integrierten Schaltung 59 verbundenen U-Schnittstellen U1 bis U4 sind alle inaktiv, d.h. es wird kein Signal über diese Schnittstellen gesendet oder empfangen. Keine der U-Schnittstellen U1 bis U4 kann damit als Referenz-Taktgeber genommen werden.

Von den mit der zweiten integrierten Schaltung 60 verbunden U-Schnittstellen U5 bis U8 sind U6 und U8 aktiv, d.h. über diese beiden Schnittstellen wird ein Signal gesendet oder empfangen. Die zweite integrierte Schaltung 60 ist so programmiert, daß die U-Schnittstelle U8 als Referenz-Taktgeber dienen soll. Dazu wird das Referenz-Taktsignal 64, das über die U-Schnittstelle U8 intern in der zweiten integrierten Schaltung 60 erzeugt wird an die erste integrierte Schaltung 59 - den Master - als externer Referenztakt geführt. Die erste integrierte Schaltung 59 ist dazu auf einen externen Referenztakt programmiert.

Der dritten integrierten Schaltung 61 wird von der zweiten integrierten Schaltung 60 der 15,36 MHz Takt 63 auf den zum Anschließen eines Quarzes vorgesehenen Anschluß XIN geführt. Auch bei dieser integrierten Schaltung wird somit ein Quarz eingespart. Wenn mindestens ein der mit der dritten integrierten Schaltung 61 verbundenen U-Schnittstellen U9 bis U12 aktiv ist, d.h. über eine der U-Schnittstellen ein Signal empfangen oder gesendet wird, ist die dritte integrierte Schaltung als Ersatzreferenz-Taktgeber für die zweite integrierte Schaltung 60 programmiert. Dazu wird der Referenztakt 65 von der dritten integrierten Schaltung 61 als externer Referenztakt an die zweite integrierte Schaltung 60 geführt.

Die zweite 60 und dritte 61 integrierte Schaltung sind als Slaves konfiguriert und erhalten demnach den Rahmentakt FSC und den Bittakt DCL von der ersten integrierten Schaltung 59.

Die zweite integrierte Schaltung ist als Referenz-Taktgeber programmiert, kann aber bei einem Ausfall aller verbunden U-Schnittstellen U5 bis U8 auf den externen Referenztakt von der dritten integrierten Schaltung 61 umprogrammiert werden. Dazu kann eine Schaltung zur Überwachung der U-Schnittstellen vorgesehen werden, die automatisch den Referenz-Taktgeber einstellt, d.h. in diesem Fall die zweite integrierte Schaltung umprogrammiert.

## Patentansprüche

1. Schaltungsanordnung für ein Kommunikationssystem zum Abschließen einer Mehrzahl von Schnittstellen (41-44) an einem gemeinsamen Bus (18) und zur Erzeugung eines Synchronisierungstaktes (52) zur Synchronisierung des Busses (18) mit:
einem durch ein erstes Steuersignal (45) steuerbaren ersten Multiplexer (47) mit einer Mehrzahl von Eingängen entsprechend einer Mehrzahl von Übertragungsleitungen der Schnittstellen (41-44);
einer Phasenregelschleife (48), an derem ersten Eingang ein Takt von einem Taktgenerator (55), der mit einem externen Schwingquarz (58) betreibbar ist, anliegt,
einem durch ein zweites Steuersignal (51) steuerbaren zweiten Multiplexer (49), an dessen Eingängen das Ausgangssignal der Phasenregelschleife (48) und ein extern zuführbarer Referenztakt (46) anliegen; und
einer Taktteilereinheit (50),
**gekennzeichnet durch**, eine jeweilige für einen jeden Eingang des ersten Multiplexers (47) vorgeschalteten Phase Control Unit (66-69), die aus dem Empfangssignal der entsprechenden Übertragungsleitung ein jeweiliges Taktgebersignal ableitet;
wobei das Taktgebersignal einer der Übertragungsleitungen in Abhängigkeit vom ersten Steuersignal (45) als Ausgangssignal des ersten Multiplexers (47) durchschaltbar ist, an einem zweiten Eingang der Phasenregelschleife (48) das Ausgangssignal des ersten Multiplexers (47) anliegt und an einem Ausgang der Phasenregelschleife (48) ein aus dem Taktgebersignal und dem Takt vom Taktgenerator (55) erzeugter interner Referenztakt anliegt;
einen Ausgangsanschluß (54) für den Takt von dem Taktgenerator (55);
wobei eines der Eingangssignale des zweiten Multiplexers (49) in Abhängigkeit vom zweiten Steuersignal (51) als Ausgangssignal des zweiten Multiplexers (49) durchschaltbar ist;
eine dem zweiten Multiplexer (49) nachgeschalteten Taktteilereinheit (50) zur Erzeugung des Synchronisierungstaktes (52) aus dem Ausgangssignal des zweiten Multiplexers (49).

2. Schaltungsanordnung nach Anspruch 1, **dadurch gekennzeichnet , daß** das Taktgebersignal durch eine Kombination der Empfangssignale von mindestens zwei Übertragungsleitungen der Schnittstellen (41, 42, 43, 44) erzeugbar ist, insbesondere durch Mittelung.

3. Schaltungsanordnung nach einem der vorhergehenden Ansprüche, **dadurch gekennzeichnet, daß** Signale, die über die Übertragungsleitungen der Schnittstellen (41, 42, 43, 44) übertragbar sind, dem U-Schnittstellenprotokoll von ISDN entsprechen.

4. Schaltungsanordnung nach einem der Ansprüche 1 bis 3, **dadurch gekennzeichnet, daß** Signale, die über die Übertragungsleitungen der Schnittstellen (41, 42, 43, 44) übertragbar sind, einem XDSL-Protokoll entsprechen.

5. Schaltungsanordnung nach Anspruch 4, **dadurch gekennzeichnet, daß** das XDSL-Protokoll einem ADSL- oder SDSL- oder VDSL- oder HDSL-Protokoll entspricht.

## Claims

1. Circuit arrangement for a communication system for terminating a plurality of interfaces (41-44) at a common bus (18) and for generating a synchronization clock (52) for synchronizing the bus (18), comprising:
a first multiplexer (47), which can be controlled by a first control signal (45), with a plurality of inputs corresponding to a plurality of transmission lines of the interfaces (41-44);
a phase locked loop (48), to whose first input a clock from a clock generator (55) which can be operated with an external oscillating crystal (58) is applied;
a second multiplexer (49), which can be controlled by a second control signal (51), to whose inputs the output signal from the phase locked loop (48) and a reference clock (46), which can be supplied externally, are applied; and
a clock divider unit (50),
**characterized by** a respective phase control unit (66-69), preceding each input of the first multiplexer (47), which derives a respective clock generator signal from the received signal on the corresponding transmission line;
where the clock generator signal of one of the transmission lines can be switched through as an output signal from the first multiplexer (47) as a function of the first control signal (45), the output signal from the first multiplexer (47) is applied to a second input of the phase locked loop (48), and an internal reference clock, which is generated from the clock generator signal and the clock of the clock generator (55), is produced at one output of the phase locked loop (48).
an output connection (54) for the clock from the clock generator (55);
where one of the input signals of the second multiplexer (49) can be switched through as the output signal from the second multiplexer (49) as a function of the second control signal (51);
a clock divider unit (50), following the second multiplexer (49), for generating the synchronizing clock (52) from the output signal from the second multiplexer (49).

2. Circuit arrangement according to Claim 1, **characterized in that** the clock generator signal can be generated by a combination of the received signals of at least two transmission lines of the interfaces (41, 42, 43, 44), particularly by averaging.

3. Circuit arrangement according to one of the preceding claims, **characterized in that** signals which can be transmitted via the transmission lines of the interfaces (41, 42, 43, 44) correspond to the U interface protocol of ISDN.

4. Circuit arrangement according to one of claims 1 to 3, **characterized in that** signals which can be transmitted via the transmission lines of the interfaces (41, 42, 43, 44) correspond to an XDSL protocol.

5. Circuit arrangement according claim 4, **characterized in that** the XDSL protocol corresponds to an ADSL or SDSL or VDSL or HDSL protocol.

## Revendications

1. Circuit pour un système de communication, afin de fermer une pluralité d'interfaces (41 à 44) sur un bus commun, et pour générer une cadence de synchronisation (52) afin de synchroniser le bus (18), comprenant :
un premier multiplexeur (47) susceptible d'être commandé par un premier signal de commande (45), avec une pluralité d'entrées correspondant à une pluralité de lignes de transmission des interfaces (41 à 44) ;
une boucle de régulation de phase (48), à une première entrée de laquelle est appliquée une impulsion venant d'un générateur d'impulsions (55), susceptible de fonctionner avec un quartz oscillant (58) externe ;
un deuxième multiplexeur (49), susceptible d'être commandé par un autre signal de commande (51), aux entrées duquel le signal de sortie de la boucle de régulation de phase (48) et une cadence de référence (46), pouvant être amenée de façon externe, sont appliqués ; et
une unité de division de cadence (50),
**caractérisé par** une unité de commande de phase (66 à 69) respective, branchée en amont de chaque entrée du premier multiplexeur (47) et, à partir du signal de réception de la ligne de transmission correspondante, déduit un signal de cadenceur respectif,
où le signal de cadenceur d'une des lignes de transmission est susceptible d'être commuté en fonction d'un premier signal de commande (46) en tant que signal de sortie du premier multiplexeur (47), le signal de sortie du premier multiplexeur (47) est appliqué à une deuxième entrée de la boucle de régulation de phase (48), et, à une sortie de la boucle de phase (48), est appliquée une cadence de référence interne, générée depuis le signal de cadenceur et la cadence de cadencement du générateur de cadences (55) ;
un raccordement de sortie (54) pour la cadence venant du générateur de cadences (55) ;
où l'un des signaux d'entrée du deuxième multiplexeur (49), en fonction du deuxième signal de commande (51), est susceptible d'être commuté en tant que signal de sortie du deuxième multiplexeur (49) ;
une unité de division de cadence (50), branchée en aval du deuxième multiplexeur (49), pour générer la cadence de synchronisation (52) à partir du signal de sortie du deuxième multiplexeur (49).

2. Circuit selon la revendication 1, **caractérisé en ce que** le signal de cadenceur est susceptible d'être généré par une combinaison des signaux de réception d'au moins deux lignes de transmission des interfaces (41, 42, 43, 44), en particulier en formant la moyenne.

3. Circuit selon l'une des revendications précédentes, **caractérisé en ce que** des signaux, susceptibles d'être transmis par les lignes de transmission des interfaces (41, 42, 43, 44), correspondent au protocole d'interface U de l'ISDN.

4. Circuit selon l'une des revendications 1 à 3, **caractérisé en ce que** des signaux, susceptibles d'être transmis par les lignes de transmission des interfaces (41, 42, 43, 44), correspondent à un protocole XDSL.

5. Circuit selon la revendication 4, **caractérisé en ce que** le protocole XDSL correspond à un protocole ADSL ou SDSL ou VDSL ou HDSL.
